# EUROPÄISCHE PATENTSCHRIFT

(11) **EP 2 896 856 B1**
(45) Veröffentlichungstag und Bekanntmachung des Hinweises auf die Patenterteilung: **07.12.2016**
(21) Anmeldenummer: 14199572.0
(22) Anmeldetag: 22.12.2014
(51) Int. Cl.: F16K 15/06, F16K 15/18

(54) **Als Erstbefüllungsventil ausgebildetes Rückschlagventil**
Check valve designed as an initial filling valve
Clapet anti-retour conçu comme un clapet de premier remplissage

(30) Priorität: 14.01.2014 DE 102014200543
(43) Veröffentlichungstag der Anmeldung: 22.07.2015
(73) Patentinhaber: Mahle International GmbH, 70376 Stuttgart (DE)
(72) Erfinder: Eichinger, Thomas, 73663 Berglen (DE); Engelin, Werner, 72649 Wolfschlugen (DE); Bindel, Uwe, 71384 Weinstadt (DE)
(74) Vertreter: BRP Renaud & Partner mbB Rechtsanwälte Patentanwälte Steuerberater

(56) Entgegenhaltungen:
- DE-A1- 10 345 596
- DE-A1- 19 616 646
- DE-C1- 19 547 493
- DE-U1- 20 215 258
- US-A- 3 434 494

## Beschreibung

Die Erfindung betrifft ein als Erstbefüllungsventil ausgebildetes Rückschlagventil für ein Ölfiltermodul nach dem Oberbegriff des Anspruchs 1. Die Erfindung betrifft ferner ein Ölfiltermodul mit einem solchen Rückschlagventil nach dem Oberbegriff des Anspruchs 9.

Im Motorenbau und verwandten Technologiebereichen kommen zur Aufbereitung von Schmierölen und Kraftstoffen sogenannte Flüssigkeitsmanagement-Systeme zum Einsatz. Dabei stellen neuere technische Entwicklungen - genannt seien insbesondere die zunehmende Verwendung moderner Leichtlauföle mit verbesserter Schmutzaufnahmekapazität zur Reduzierung hydraulischer Verluste sowie die in modernen Dieselmotoren angewandten Verbrennungsverfahren mit Hochdruckeinspritzung und entsprechend erhöhter Schmierölkontaminierung durch Rußpartikel im Blow-by - konventionelle Ölmanagement-Systeme vor hohe Anforderungen.

Um der fortschreitenden Technologieentwicklung im Bereich der Motorschmierung angemessen Rechnung zu tragen, umfasst der Stand der Technik neben herkömmlichen Anschraub- und Inlinefiltern insbesondere als Ölfiltermodule bezeichnete komplexe Multifunktions-Aufbereitungssysteme in Modulbauweise, die neben der Filtration auch Aufgaben der Steuerung sowie des Thermomanagements des Schmieröls übernehmen können. Gattungsgemäße Ölfiltermodule integrieren hierzu beispielsweise Funktionen zur Ölnebelabscheidung, Sensorik für Druck- und Temperatursteuerung, Regelungen für Öl- und Kurbelgehäusedruck sowie Schnittstellen zur Anbindung eines Kraftstoffkühlers und steuern so den gesamten Ölkreislauf.

Ein derartiger Ölkreislauf umfasst dabei typischerweise eine auch als Rücklaufsperrventil bekannte Rückschlagarmatur, welche - etwa beim Abstellen eines mit Schmieröl versorgten Verbrennungsmotors - das Leerlaufen der Filtereinrichtung verhindert, um den für einen Neustart erforderlichen Öldruck möglichst schnell wiederherstellen zu können. Ein solches Ventil wird in DE 10 2011 104 383 A1 offenbart und kann im Rahmen der Fertigung mit Anschlussstutzen unterschiedlicher Geometrie versehen werden. DE 196 16 646 A1schlägt zur Entsperrung eines solchen Ventils ferner dessen konstruktive Ergänzung um ein Rastmittel vor, in welches sein Ventilkörper einrastet, um diesen innerhalb eines zugehörigen Ventilgehäuses vorübergehend in einer vorgesehenen Offenstellung zu halten.

Aus der US 3,434,494 A ist ein gattungsgemäßes Ventil mit einem Ventilkegel bekannt, der einen Durchgang zum Durchleiten eines Fluids durch Anliegen an einen Ventilsitz verschließt. Nimmt der Druck auf die Oberfläche des Ventilkegels zu, so verschiebt sich der Ventilkegel, wobei gleichzeitig ein Pin durch einen hinteren Eingang des Ventilkörpers bzw. Ventilkegels geschoben wird. Tritt dabei der Pin weit genug in die Öffnung des Ventilkegels, so spreizen Arme nach außen und arretieren den Ventilkörper in einer Offenstellung gegen die Feder.

Problematisch bleibt indes besonders die Erstbefüllung des Ölkreislaufs im Rahmen der Herstellung. Eine solche Vorbereitung erfolgt in der Regel werksseitig, um zu verhindern, dass die Ölpumpe bei Inbetriebnahme durch den Endbenutzer die das Leitungssystem ausfüllende Luft gegen den Widerstand des Rückschlagventils aus den Leitungen treiben muss, während die von ihr gespeiste Maschine nicht oder nur unzureichend mit Schmiermittel versorgt werden kann.

Eine Aufgabe der Erfindung besteht daher in der Bereitstellung eines Rückschlagventils, welches eine einfache und komfortable Entsperrung zum Zwecke der Erstbefüllung unterstützt. Eine weitere Aufgabe der Erfindung liegt in der Schaffung eines Ölfiltermoduls, welches eine entsprechende Funktion zum Befüllen besitzt.

Diese Aufgaben werden durch ein Rückschlagventil mit den Merkmalen des Anspruchs 1 sowie durch ein Ölfiltermodul mit den Merkmalen des Anspruchs 9 gelöst.

Die Erfindung fußt demnach auf dem Grundgedanken, ein gattungsgemäßes federbelastetes Rückschlagventil um eine mechanische Arretierung zu ergänzen, welche auf einen Ventilkörper des Rückschlagventils wirkt. Erfindungsgemäß ist die Arretierung dabei aus einem Werkstoff gefertigt, welcher die in der Physik als Elastizität bezeichnete Eigenschaft besitzt, reversibel auf eine auf ihn ausgeübte Kraft zu reagieren. Ventilkörper, Arretierung und Feder sind dabei in Form und Anordnung so aufeinander abgestimmt, dass im - gegen die Vorspannkraft der Feder - geöffneten Zustand des Rückschlagventils die Arretierung durch mechanische Spreizung derart deformiert werden kann, dass sie den Ventilkörper gegen die Druckfeder abstützen und das Ventil somit vorübergehend entsperren und entgegen der üblichen Durchflussrichtung durchgängig machen kann. Erfindungswesentlich ist dabei, dass der Ventilkörper, die Druckfeder und die Arretierung so konfiguriert sind, dass die Druckfeder unvollständig gestaucht ist, wenn die Arretierung den Ventilkörper abstützt, sodass die Arretierung sich von dem Ventilkörper löst, wenn die Druckfeder weiter gestaucht wird.

In einer bevorzugten Ausführungsform ist der Ventilkörper zu diesem Zweck auf einer dem Ventilsitz abgewandten Stirnfläche mit einem Sackloch dergestalt versehen, dass der Ventilkörper beim Öffnen des Rückschlagventils durch Ausüben einer mechanischen Kraft entgegen der Vorspannung gleichsam auf die Arretierung aufgeschoben werden kann. Zum Abstützen des Ventilkörpers auf der Arretierung dient in diesem Fall eine entlang der Wandung des Sacklochs in den Ventilkörper eingeformte Stützfläche, die im entsperrten Betrieb des Rückschlagventils der verformten Arretierung ein formschlüssiges Aufliegen erlaubt.

Hinsichtlich der Arretierung selbst empfiehlt sich indes eine Formgebung, die das Eingreifen eines geeigneten Arbeitsgerätes ermöglicht, um die zur deformierenden Spreizung der Arretierung, insbesondere deren Spreiznasen, innerhalb des Ventilkörpers erforderlichen Radialkräfte ausüben zu können. Als Beispiel eines derartigen Werkzeugs kommt etwa der dem Fachmann vertraute Spreizdorn in Betracht, welcher, wenn er endseitig in den Ventilkörper eingetrieben wird, eine konvexe Krümmung der Arretierung herbeiführt.

Erfindungsgemäß weist das Rückschlagventil eine Konfiguration von Arretierung Ventilkörper und Druckfeder auf, bei welcher die Arretierung bereits bei unvollständiger Stauchung der Druckfeder in ihrer das Rückschlagventil entsperrenden Stellung einrastet. In diesem Fall verbleibt dem Ventilkörper in Richtung der Auflagefläche der Feder ein gewisses Spiel, sodass die Feder unter zunehmendem Druck noch intensiver zusammengepresst werden kann, um der somit entlasteten Arretierung ein Zurückkehren in ihre Ausgangsform zu ermöglichen. Die auf diesem Wege lösbare Anordnung von Arretierung und Ventilkörper wiederum gewährleistet, dass ein - etwa bei der Inbetriebnahme eines mit einem erfindungsgemäßen Rückschlagventil ausgerüsteten Ölfiltermoduls - das Rückschlagventil entgegen seiner Durchlassrichtung durchströmendes Fluid die zur Erstbefüllung vorgenommene Entsperrung aufheben und das Rückschlagventil somit dauerhaft in seinen regulären Betriebszustand zu versetzen vermag.

Ein an eine entsprechende Gegenkontur des Ölfiltermoduls angepasster Formübergang des Rückschlagventils kann dabei in der Funktion eines mechanischen Adapters das formschlüssige Einsetzen des Rückschlagventils in eine hierzu vorgesehene Aufnahmeöffnung des Ölfiltermoduls unterstützen. Rückschlagventil und Adapter können hierzu zwar separat hergestellt und zu einem späteren Zeitpunkt mittels einschlägiger Fügeverfahren zu einer Baugruppe kombiniert werden. Vorzüge bietet jedoch eine integrale Ausführung des Adapters mit einem Ventilgehäuse des Rückschlagventils, welches in diesem Szenario zugleich zur Lagerung des beweglichen Ventilkörpers und als Auflage der Druckfeder dienen mag. Das erfindungsgemäße Rückschlagventil kann so durch eine einfache Anpassung des Adapters in unterschiedlichsten Ölfiltermodulen oder anderen baugruppen eingesetzt werden.

Als Urformverfahren zur Fertigung des einstückigen Rückschlagventils bietet sich hier das vor allem in der Kunststoffverarbeitung genutzte Spritzgussverfahren an, welches bei hoher Genauigkeit die zeiteffiziente Herstellung geeigneter Formteile in großer Stückzahl unter ökonomisch günstigen Rahmenbedingungen erlaubt. Das Spritzgießen des Rückschlagventils eröffnet dem Fachmann darüber hinaus einen breiten Gestaltungsspielraum hinsichtlich der gewünschten Oberflächenstruktur der Baugruppe und gestattet so deren anwendungsspezifische Optimierung.

Die Integration des Rückschlagventils in ein geeignetes Ölfiltermodul - etwa im Rahmen der Fahrzeugmontage - kann zusätzlich mittels eines an dem Ventilgehäuse zapfenförmig ausgebildeten Fortsatzes erleichtert werden, der die formschlüssige Fügeverbindung beider Einzelelemente sicherstellt und somit den Aufwand zu ihrer relativen Positionierung maßgeblich verringert. Die Ergänzung eines erfindungsgemäßen Rückschlagventils um einen derart angeordneten Zapfen erweist sich unter fertigungspraktischen Gesichtspunkten daher als besonders vorteilhaft.

Schließlich lässt sich eine beträchtliche Strömungsoptimierung der Gesamtvorrichtung erreichen, indem ein als Fluidverbindung zum Ölfiltermodul dienender Ölanschluss nicht etwa koaxial zu Durchgang, Ventilsitz, Ventilkörper oder Druckfeder des Rückschlagventils angeordnet, sondern vielmehr als radiale Aussparung des Ventilgehäuses ausgebildet ist. Eine Beeinträchtigung des Öldrucks durch das - insbesondere im entsperrten Zustand des Rückschlagventils arretierte - Ventilkörper wird auf diesem Wege verhindert oder auf ein Mindestmaß reduziert. Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: die perspektivische Gesamtansicht eines geschlossenen Rückschlagventils für ein Ölfiltermodul gemäß einer Ausführungsform der Erfindung,
- Fig. 2: einen Längsschnitt des geschlossenen Rückschlagventils gemäß Figur 1,
- Fig. 3: eine Figur 1 entsprechende Ansicht des geöffneten Rückschlagventils,
- Fig. 4: einen Längsschnitt des geöffneten Rückschlagventils gemäß Figur 3,
- Fig. 5: die Teilansicht eines mit dem Rückschlagventil ausgerüsteten Ölfiltermoduls,
- Fig. 6: die perspektivische Ansicht einer Kolbenpositionierung für das Rückschlagventil und
- Fig. 7: die perspektivische Ansicht eines Spreizdorns für das Rückschlagventil.

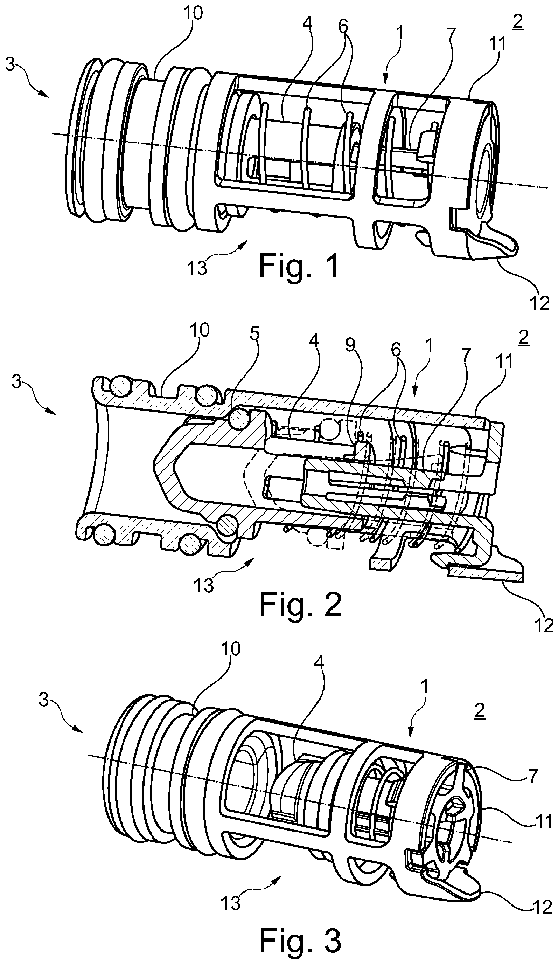

Die Figuren 1 und 2 illustrieren den Aufbau eines erfindungsgemäßen Rückschlagventils 1 in seinem geschlossenen Betriebszustand. Als Rückschlagventil 1 wird dabei für die Zwecke der vorliegenden Ausführungen jedwedes Ventil verstanden, welches in einem solchen Betriebszustand die Strömung eines Fluids in nur einer Richtung zulässt. Das Rückschlagventil 1 umfasst hierzu ein - in Verlängerung der vorgesehenen Strömungsrichtung 13 des Fluids durch einen im Wesentlichen hohlzylindrischen Durchgang 3 - beweglich gelagerten Ventilkörper 4, welcher aufgrund seiner Formgebung die Strömung des Fluids reduzieren oder unterbrechen kann, indem er in axialer Richtung an eine passend geformte Öffnung des Durchgangs 3 angepresst wird. Diese Öffnung wird in der gegebenen Ausführungsform durch einen entlang des Umfangs des Durchgangs 3 ringförmig ausgebildeten Ventilsitz 5 gebildet, der den Ventilkörper 4 formschlüssig aufnimmt.

Beim Rückschlagventil 1 der Figur 1 handelt es sich um eine durch eine Druckfeder 6 belastete Armatur, dessen Ventilkörper 4 - in dem in Figur 1 und 2 gezeigten entsperrten bzw. geschlossenen Zustand des Rückschlagventils 1 - entgegen der vorgesehenen Durchflussrichtung durch die Druckfeder 6 geschlossen, in der anderen Richtung dagegen vom den Durchgang 3 durchströmenden Fluid freigegeben wird. Steht in der Durchlassrichtung ein Druck an, der die durch die Druckfeder 6 ausgeübte Vorspannkraft überwinden kann, wird der Ventilkörper 4 von seinem Ventilsitz 5 abgehoben und erlaubt einen Durchfluss des Fluids durch den Durchgang 3.

Als Druckfeder werden im vorliegenden Kontext grundsätzlich sämtliche Maschinenelemente aufgefasst, welche unter Belastung nachgeben und nach ihrer Entlastung in die ursprüngliche Gestalt zurückkehren, sich also im weitesten Sinne elastisch rückstellend verhalten und durch ihre Formänderung Kräfte speichern oder übertragen können. Die in Rede stehende Druckfeder 6 ist dabei als Schraubendruckfeder aus Rund- oder Profildraht schraubenförmig mit im Wesentlichen gleichbleibender Windungssteigung um das Ventilkörper 4 gewunden oder gewickelt und kann daher auf Druck sowie in geringerem Maße auf Torsion um die Ventilkörper 4 und Druckfeder 6 gemeinsame Mittelachse beansprucht werden. Eine Krafteinleitung in die Endwindungen der Druckfeder 6 kann insbesondere durch das den Durchgang 3 entgegen der Wirkrichtung der Druckfeder 6 durchströmende Fluid über das Ventilkörper 4 erfolgen. Dieser Strömung setzt die Druckfeder 6 aufgrund ihrer Geometrie und Werkstoffauswahl eine elastische Gegenkraft entgegen, die - abhängig vom anwendungsspezifisch erwarteten Volumenstrom, welcher etwa durch die Pumpleistung einer in den Abbildungen nicht gezeigten Ölpumpe des entsprechend ausgerüsteten Ölfiltermoduls 2 bedingt wird - einerseits ausreicht, den Ventilkörper 4 fluiddicht in seinen Ventilsitz 5 zu drücken, andererseits aber eine nahezu vollständige Stauchung der Druckfeder 6 in Verlängerung der Strömungsrichtung des Fluids durch den Durchgang 3 erlaubt.

Als erfindungswesentlich erweist sich im Falle einer solchen Stauchung der Druckfeder 6 des Rückschlagventils 1 die bereits in Figur 1 und 2 erkennbare mechanische Arretierung 7, wobei dieser Gattungsbegriff im gegebenen Zusammenhang dem Grundsatz nach jede zum Feststellen des Ventilkörpers 4 in seiner geöffneten Position geeignete Vorrichtung erfasst. Stellvertretend für unterschiedlichste Rast-, Klemm- oder Spannanordnungen besitzt die Arretierung 7 gemäß der vorliegenden Ausführungsform die Gestalt einer Parallelkonfiguration näherungsweise äquidistanter länglicher Bügel, auch Rastnasen genannt, welche im Wege einer ringförmigen Basis die Einführung eines kompatiblen Werkzeugs zum Zwecke ihrer radialen Spreizung zulässt.

Bereits in seiner in Figur 1 und 2 gezeigten geschlossenen Ausgangsstellung ist das Ventilkörper 4 dabei mittels eines endseitig ausgebildeten, annähernd konzentrischen Sacklochs 8 im Ansatz auf die Arretierung 7 aufgeschoben und geht mit dieser eine kraftschlüssige Verbindung ein. Als Sackloch ist hier - ungeachtet des konkret angewandten Herstellungsverfahrens - im Sinne der Konstruktionslehre jede Bohrung zu verstehen, welche das Ventilkörper 4 in Richtung des Durchgangs 3 zur Abdichtung des Fluids nicht vollständig durchdringt, also eine hinter der Gesamtlänge des Ventilkörpers 4 zurückbleibende Tiefe aufweist.

Konkret besitzt das Sackloch 8 der hier diskutierten Ausführungsform eine im Wesentlichen zylindrische Gestalt, was einer konisch oder anderweitig zulaufenden Formgebung in alternativen Ausführungsformen der Erfindung nicht entgegensteht.

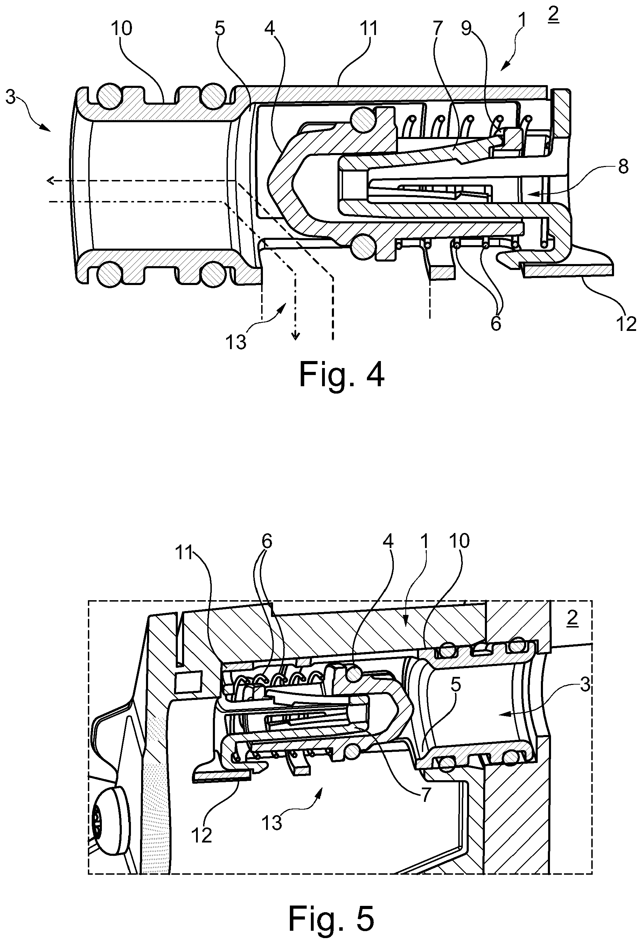

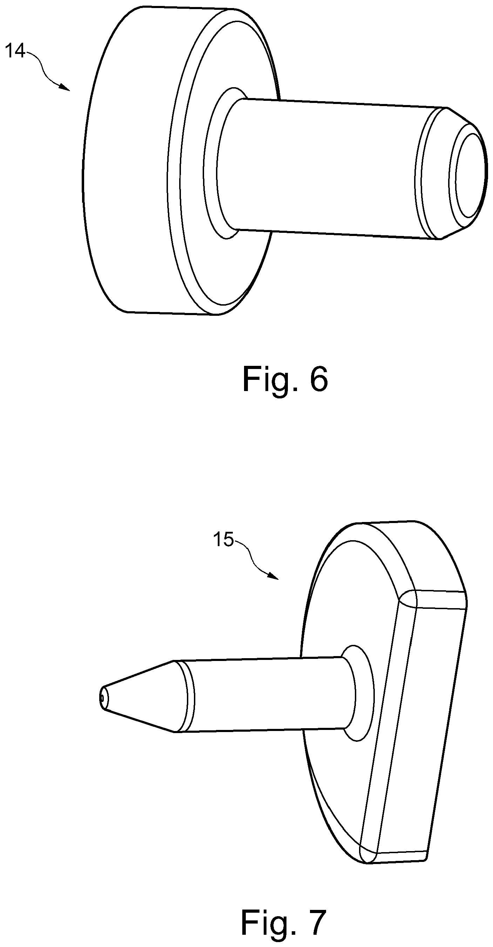

Das erfindungsgemäße Zusammenwirken von Arretierung 7 und Sackloch 8 verdeutlichen die Figuren 3 und 4, welche das Rückschlagventil 1 in dessen - zum Zwecke der Erstbefüllung des Ölfiltermoduls 2 mit Schmieröl - gesperrtem Betriebszustand zeigen. In diesem Szenario ist die Druckfeder 6 durch mechanische Krafteinwirkung entgegen ihrer Vorspannung derart gestaucht, dass das Sackloch 8 den Ventilkörper 4 und die Arretierung 7 nahezu vollständig aufnehmen kann. Eine einseitig in der Wandung des Sacklochs 8 vorgesehene Aussparung gestattet in diesem Fall das Einführen des in Figur 7 gezeigten Spreizdorns 15 durch die ringförmige Basis der Arretierung 7, um Letztere entgegen ihrer elastischen Vorspannkraft plastisch zu deformieren. Die so erzielte Formveränderung der Arretierung 7 führt dazu, dass zumindest einer ihrer in radialer Richtung durch den Spreizdorn 15 verbogenen Bügel (Rastnasen) teilweise das Grundvolumen des Sacklochs 8 verlässt und sich mit dem Ventilkörper 4 im Bereich dessen hierzu vorgesehener Stützfläche 9 verhakt. Als weitere Montagehilfe zum Öffnen des Ventilkörpers 4 dient hierbei eine in Figur 6 dargestellte Kolbenpositionierung 14, welche an der dem Spreizdorn 15 gegenüber liegenden Seite des Rückschlagventils 1 angesetzt werden kann.

Zur Illustration des praktischen Nutzens dieser Entsperrfunktion mag die umfassendere Darstellung des Ölfiltermoduls 2 gemäß Figur 5 dienen. In seiner dem Zustand der Figuren 3 und 4 entsprechenden geöffneten Stellung ist das Rückschlagventil 1 hier bis zum Anschlag eines hierzu vorgesehenen Zapfens 12 an einer entsprechenden Gegenkontur des Ölfiltermoduls 2 in dieses eingeschoben und über seinen radial zu Durchgang 3, Ventilkörper 4, Ventilsitz 5 sowie Druckfeder 6 im Ventilgehäuse 7 ausgebildeten Ölanschluss 13 fluidisch mit dem Ölfiltermodul 2 verbunden. Die Orientierung des Rückschlagventils 1 entspricht dabei einer Durchlassrichtung des Schmieröls, welches dessen unerwünschten Rücklauf nach der Inbetriebnahme des Ölfiltermoduls 2 wirksam unterbindet.

## Patentansprüche

1. Als Erstbefüllungsventil ausgebildetes Rückschlagventil (1) für ein Ölfiltermodul (2) mit
- einem Durchgang (3) zum Durchleiten eines Fluids,
- einem in den Durchgang (3) eingreifenden, beweglich gelagerten Ventilkörper (4), der durch Anliegen an einen Ventilsitz (5) den Durchgang (3) verschließt,
- einer mit dem Ventilkörper (4) mechanisch verbundenen Druckfeder (6) zum Vorspannen des Ventilkörpers (4) seine Schließstellung,
- einer elastischen Arretierung (7) zum Arretieren des Ventilkörpers (4) in seiner Offenstellung dergestalt, dass die Arretierung (7) den Ventilkörper (4) gegen die Druckfeder (6) abstützt, wenn die Arretierung (7) gespreizt und die Druckfeder (6) gestaucht ist,
**dadurch gekennzeichnet, dass**
der Ventilkörper (4), die Druckfeder (6) und die Arretierung (7) so konfiguriert sind, dass die Druckfeder (6) unvollständig gestaucht ist, wenn die Arretierung (7) den Ventilkörper (4) abstützt, sodass die Arretierung (7) sich von dem Ventilkörper (4) löst, wenn die Druckfeder (6) weiter gestaucht wird.

2. Rückschlagventil nach Anspruch 1,
**dadurch gekennzeichnet, dass** der Ventilkörper (4)
- in einer dem Ventilsitz (5) abgewandten Stirnfläche ein Sackloch (8) zum Aufschieben des Ventilkörpers (4) auf die Arretierung (7) und
- eine das Sackloch (8) zumindest bereichsweise umlaufende Stützfläche (9) zum Abstützen gegenüber der Arretierung (7) aufweist.

3. Rückschlagventil nach Anspruch 2,
**dadurch gekennzeichnet, dass**
die Arretierung (7) so geformt ist, dass ein Werkzeug zum Spreizen, insbesondere ein Spreizdorn (15), in die Arretierung (7) eingreifen kann.

4. Rückschlagventil nach einem der Ansprüche 1 bis 3,
**gekennzeichnet durch**
einen mechanischen Adapter (10) zum Einpassen des Rückschlagventils (1) in das Ölfiltermodul (2).

5. Rückschlagventil nach einem der Ansprüche 1 bis 4,
**dadurch gekennzeichnet, dass**
der Durchgang (3) in dem Adapter (10) ausgebildet ist.

6. Rückschlagventil nach Anspruch 5,
**gekennzeichnet durch**
ein einstückig mit dem Adapter (10), insbesondere mittels eines Spritzgussverfahrens, ausgebildetes Ventilgehäuse (11) zum Lagern des Ventilkörpers (4), wobei die Druckfeder (6) mechanisch mit dem Ventilgehäuse (11) verbunden ist.

7. Rückschlagventil nach Anspruch 6,
**gekennzeichnet durch**
einen an dem Ventilgehäuse (11) ausgebildeten Zapfen (12) zum formschlüssigen Verbinden des Rückschlagventils (1) mit dem Ölfiltermodul (2).

8. Rückschlagventil nach einem der Ansprüche 6 oder 7,
**gekennzeichnet durch**
einen radial zu der Druckfeder (6) in dem Ventilgehäuse (11) ausgebildeten Ölanschluss (13) zum Anschließen des Rückschlagventils (1) an das Ölfiltermodul (2).

9. Ölfiltermodul (2) mit
- einem Ölfilter zum Filtrieren eines Schmieröls und
- einer mit dem Ölfilter fluidisch verbundenen Ölpumpe zum Pumpen des Schmieröls durch den Ölfilter,
**gekennzeichnet durch**
- ein zwischen dem Ölfilter und der Ölpumpe angeordnetes Rückschlagventil (1) nach einem der Ansprüche 1 bis 8 zum Sperren eines Rücklaufs des Schmieröls von dem Ölfilter zu der Ölpumpe.

## Claims

1. A non-return valve (1) designed as an initial filling valve for an oil filter module (2) with
- a passage (3) for conducting a fluid,
- a moveably mounted valve body (4) engaging in the passage (3), which by lying against a valve seat (5) closes off the passage (3),
- a compression spring (6) that is mechanically connected to the valve body (4) for preloading the valve body (4) in its closing position,
- an elastic lock (7) for locking the valve body (4) in its open position in such a manner that the lock (7) supports the valve body (4) against the compression spring (6) when the lock (7) is spread and the compression spring (6) compressed,
**characterized in that**
the valve body (4) the compression spring (6) and the lock (7) are configured so that the compression spring (6) is incompletely compressed when the lock (7) supports the valve body (4), so that the lock (7) detaches from the valve body (4) when the compression spring (6) is further compressed.

2. The non-return valve according to claim 1, **characterized in that** the valve body (4)
- in an end face facing away from the valve seat (5) comprises a blind hole (8) for sliding the valve body (4) onto the lock (7) and
- a support surface (9) surrounding the blind hole (8) at least in some regions for supporting against the lock (7).

3. The non-return valve according to claim 2,
**characterized in that**
the lock (7) is formed so that a tool for spreading, in particular a spreading mandrel (15) can engage in the lock (7).

4. The non-return valve according to any one of the claims 1 to 3,
**characterized by**
a mechanical adapter (10) for fitting the non-return valve (1) into the oil filter module (2).

5. The non-return valve according to any one of the claims 1 to 4,
**characterized in that**
the passage (3) is formed in the adapter (10).

6. The non-return valve according to claim 5,
**characterized by**
a valve housing (11) which is formed in one piece with the adapter (10), in particular by means of an injection moulding method, for mounting the valve body (4), wherein the compression spring (6) is mechanically connected to the valve housing (11).

7. The non-return valve according to claim 6,
**characterized by**
a pin (12) formed on the valve housing (11) for positively connecting the non-return valve (1) to the oil filter module (2).

8. The non-return valve according to any one of the claims 6 or 7,
**characterized by**
an oil connection (13) which is formed radially to the compression spring (6) in the valve housing (11) for connecting the non-return valve (1) to the oil filter module (2).

9. An oil filter module (2) with
- an oil filter for filtering a lubricating oil and
- an oil pump which is fluidically connected to the oil filter for pumping the lubricating oil through the oil filter, **characterized by**
- a non-return valve (1) arranged between the oil filter and the oil pump according to any one of the claims 1 to 8 for blocking a return flow of the lubricating oil from the oil filter to the oil pump.

## Revendications

1. Soupape anti-retour (1) configurée comme une soupape de premier remplissage pour un module de filtre à huile (2) comportant
- un passage (3) pour guider un fluide à travers,
- un corps de soupape (4) positionné de manière mobile, s'engageant dans le passage (3), qui obture le passage (3) en venant reposer sur un corps de soupape (5),
- un ressort de pression (6) relié mécaniquement au corps de soupape (4) pour précontraindre le corps de soupape (4) dans sa position de fermeture,
- une butée élastique (7) pour arrêter le corps de soupape (4) dans sa position d'ouverture de telle sorte que la butée (7) appuie le corps de soupape (4) contre le ressort de pression (6), lorsque la butée (7) est écartée et le ressort de pression (6) est refoulé,
**caractérisée en ce que**
le corps de soupape (4), le ressort de pression (6) et la butée (7) sont configurés de telle sorte que le ressort de pression (6) soit refoulé de manière incomplète, lorsque la butée (7) appuie le corps de soupape (4), de sorte que la butée (7) se détache du corps de soupape (4), lorsque le ressort de pression (6) est davantage refoulé.

2. Soupape anti-retour selon la revendication 1,
**caractérisée en ce que**
le corps de soupape
- présente dans une surface frontale se détournant du siège de soupape (5) un alésage oblong (8) pour glisser le corps de soupape (4) sur la butée (7) et
- une surface d'appui (9) faisant le tour au moins par portions de la circonférence de l'alésage oblong (8) pour appuyer contre la butée (7).

3. Soupape anti-retour selon la revendication 2,
**caractérisée en ce que**
la butée (7) est façonnée de telle sorte qu'un outil pour écarter, notamment un mandrin d'écartement (15), puisse venir en prise avec la butée (7).

4. Soupape anti-retour selon une des revendications 1 à 3,
**caractérisée par**
un adaptateur mécanique (10) pour ajuster la soupape anti-retour (1) dans le module de filtre à huile (2).

5. Soupape anti-retour selon une des revendications 1 à 4,
**caractérisée en ce que**
le passage (3) est réalisé dans l'adaptateur (10).

6. Soupape anti-retour selon la revendication 5,
**caractérisée par**
un logement de soupape (11) conçu en un seul tenant avec l'adaptateur (10), notamment au moyen d'un procédé de moulage par injection, pour positionner le corps de soupape (4), dans laquelle le ressort de pression (6) est relié mécaniquement avec le logement de soupape (11).

7. Soupape anti-retour selon la revendication 6,
**caractérisée par**
un tourillon (12) réalisé sur le logement de soupape (11) pour relier par complémentarité de forme la soupape anti-retour (1) avec le module de filtre à huile (2).

8. Soupape anti-retour selon une des revendications 6 ou 7,
**caractérisée par**
un raccord d'huile (13) réalisé radialement au ressort de pression (6) dans le logement de soupape (11) pour raccorder la soupape anti-retour (1) au module de filtre à huile (2).

9. Module de filtre à huile (2) comportant
- un filtre à huile pour filtrer une huile lubrifiante et
- une pompe à huile reliée fluidiquement au filtre à huile pour pomper l'huile lubrifiante à travers le filtre à huile, **caractérisé par**
- une soupape anti-retour (1) disposée entre le filtre à huile et la pompe à huile selon une des revendications 1 à 8 pour bloquer un reflux de l'huile lubrifiante du filtre à huile vers la pompe à huile.
